# EUROPÄISCHE PATENTSCHRIFT

(11) **EP 3 302 922 B1**
(45) Veröffentlichungstag und Bekanntmachung des Hinweises auf die Patenterteilung: **09.08.2023**
(21) Anmeldenummer: 16722175.3
(22) Anmeldetag: 10.05.2016
(51) Int. Cl.: B29B 7/60, B29C 48/25, B29C 48/27, B29C 48/285, B29C 48/275

(54) **EXTRUSIONSVORRICHTUNG UND EXTRUSIONSVERFAHREN FÜR DIE HERSTELLUNG EINER KUNSTSTOFFFOLIE**
EXTRUSION DEVICE AND EXTRUSION METHOD FOR PRODUCING A PLASTIC FILM
DISPOSITIF D'EXTRUSION ET PROCÉDÉ D'EXTRUSION POUR LA FABRICATION D'UN FILM PLASTIQUE

(30) Priorität: 08.06.2015 DE 102015108976
(43) Veröffentlichungstag der Anmeldung: 11.04.2018
(73) Patentinhaber: Windmöller & Hölscher KG, 49525 Lengerich (DE)
(72) Erfinder: AVERMEYER, Ansgar, 49124 Georgsmarienhütte (DE); KULGEMEYER, Tobias, 49170 Hagen a.T.W. (DE); BUSSMANN, Markus, 45147 Essen (DE); BACKMANN, Martin, 49525 Lengerich (DE)
(86) Internationale Anmeldenummer: PCT/EP2016/060445
(87) Internationale Veröffentlichungsnummer: WO 2016/198223

(56) Entgegenhaltungen:
- EP-A2- 0 318 170
- DE-A1-102013 100 812
- DE-U1-202004 015 743
- JP-A- H0 639 835
- JP-A- S57 178 734

## Beschreibung

Die vorliegende Anmeldung betrifft eine Extrusionsvorrichtung für die Herstellung einer Kunststofffolie sowie ein Verfahren für die Reinigung einer derartigen Extrusionsvorrichtung.

Es ist bekannt, dass Extrusionsvorrichtungen vorgesehen werden, um Kunststofffolien herzustellen. Dabei können auf solchen Extrusionsvorrichtungen unterschiedlichste Produkte hintereinander sequenziell aufeinanderfolgend produziert werden. Für den Wechsel zwischen unterschiedlichen Produkten müssen die Materialien gewechselt werden, so dass bei Vorlagenvorrichtungen, welche innerhalb der Extrusionsvorrichtung Einsatzmaterial vorhalten, diese durch ein entsprechendes Folgematerial ausgetauscht werden muss. Das Ablassen des Einsatzmaterials und das Einfüllen des Folgematerials wird auch als Materialwechsel bezeichnet.

Nachteilhaft bei den bekannten Lösungen ist es, dass nach dem Ablassen des Einsatzmaterials häufig eine Reinigung der Vorlagevorrichtung notwendig ist bzw. vorgeschrieben ist. Um diese durchzuführen, wird üblicherweise eine Teildemontage der Vorlagevorrichtung durchgeführt und insbesondere mit Druckluft oder anderen manuellen Reinigungsmitteln durch das Maschinenbedienpersonal die Reinigung der einzelnen Bauteile der Vorlagevorrichtung vorgenommen. Dies führt zu sehr hohem Zeitaufwand für die Durchführung der Reinigung und damit einer deutlichen Verlängerung der gesamten Wechselzeit für die Durchführung eines Materialwechsels. Nicht zuletzt führt dies dazu, dass durch die rein manuelle Reinigung eine Sicherheit, dass die Reinigung mit der gewünschten Qualität auch durchgeführt worden ist, nicht gegeben ist.

Die Schrift DE 10 2013 100 812 A1 offenbart ein Verfahren für einen Materialwechsel von einem Einsatzmetarial zu einem Folgematerial bei einer Extrusionsvorrichtung für die Herstellung von Extrusionsprodukten. Die Schrift DE 20 2004 015743 U1 offenbart eine Vorrichtung zum Entfernen von Materialresten in Kunststoffverarbeitungsmaschinen wobei mehrere Vorlagenvorrichtungen vorgesehen sind, welche unterschiedliche Materialien enthalten können.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Reinigung der Extrusionsvorrichtung bei einem Materialwechsel zu verbessern.

Voranstehende Aufgabe wird gelöst durch eine Extrusionsvorrichtung mit den Merkmalen des Anspruchs 1 und ein Verfahren mit den Merkmalen des Anspruchs 10. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Extrusionsvorrichtung beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Eine erfindungsgemäße Extrusionsvorrichtung dient der Herstellung einer Kunststofffolie. Hierfür weist diese Extrusionsvorrichtung zumindest zwei Vorlagevorrichtungen für die Vorlage von Einsatzmaterial für einen Extruder auf. Dabei ist in jeder Vorlagevorrichtung eine automatische Reinigungsvorrichtung angeordnet für ein Entfernen von Einsatzmaterial aus der Vorlagevorrichtung bei einem Materialwechsel für diese Extrusionsvorrichtung.

Im Gegensatz zu den bekannten Lösungen wird durch das Einsetzen einer automatischen Reinigungsvorrichtung ein definiertes Reinigungsergebnis erzielbar. So kann eine Automation vorgesehen werden, welche eine automatische Reinigung mithilfe der automatisierten Reinigungsvorrichtung zur Verfügung stellt. So kann im Laufe des Materialwechsels, also insbesondere in der Zwischenzeit nach dem Ablassen eines Einsatzmaterials und vor dem Einfüllen eines Folgematerials dieser automatische Reinigungsvorgang mithilfe der automatischen Reinigungsvorrichtung durchgeführt werden.

Neben einem definierten Reinigungsergebnis wird auch die Zeitdauer für die Durchführung einer solchen Reinigung deutlich geringer sein, als bei manueller Ausführung, da eine Demontage oder Teildemontage der Vorlagevorrichtung nicht mehr notwendig ist. Vielmehr verbleibt die automatische Reinigungsvorrichtung an dem gewünschten Reinigungsort auch während des Normalbetriebs der Extrusionsvorrichtung, so dass sofort nach Ablassen des Einsatzmaterials mit der Reinigungsprozedur begonnen werden kann.

Nicht zuletzt wird neben einem definierten Reinigungsergebnis und der Automation und dem damit einhergehenden Zeitgewinn auch die tatsächliche Durchführung der Reinigung überwacht, so dass nicht nur quantitativ, sondern auch qualitativ eine unterschiedliche Reinigungsleistung durch ein entsprechendes Prozedere vorgegeben und nachgeprüft werden kann.

Eine Reinigungsvorrichtung kann dabei ein oder mehrere Reinigungsmittel aufweisen, die eine entsprechende Reinigungsfunktion an einem oder an unterschiedlichen Orten zur Verfügung stellen können. Neben rein mechanischen Reinigungen in Form von sich bewegenden Bürsten oder Schneckengetrieben sind insbesondere Düsenvorrichtungen vorgesehen, welche als Druckluftdüsen die entsprechende Reinigungsfunktionalität mit sich bringen. Insbesondere ist eine solche Reinigungsvorrichtung kombiniert mit einer später noch erläuterten Ablassöffnung für ein Ablassen von Einsatzmaterial, so dass dieser Reinigungsprozess nicht nur einem Transportieren des Einsatzmaterials, sondern einem Auslassen und Ausbringen des Einsatzmaterials entspricht. Somit wird das entsprechende Reinigungsprogramm insbesondere dann durchgeführt, wenn eine entsprechende Ablassöffnung zum Ablassen und Ausreinigen von Einsatzmaterial nach unten geöffnet ist.

Es kann von Vorteil sein, wenn bei einer erfindungsgemäßen Extrusionsvorrichtung die Reinigungsvorrichtung zumindest ein Reinigungsmittel aufweist mit einer Reinigungsrichtung entlang einer Ablassrichtung der Vorlagevorrichtung. Eine Ablassrichtung der Vorlagevorrichtung ist definiert als die Richtung, entlang welcher das Einsatzmaterial abgelassen werden soll. Häufig kann bei einer Vorlagevorrichtung vorzugsweise diese Ablassrichtung entlang einer Schwerkraftrichtung ausgerichtet sein, so dass mithilfe der Schwerkraft das Ausbringen für das Ablassen des Einsatzmaterials zur Verfügung gestellt ist. Eine Ausrichtung der Reinigungsrichtung entlang der Ablassrichtung ist mit einem Winkelbereich versehen, wobei die Reinigungsrichtung und die Ablassrichtung miteinander einen maximalen Winkel von 0° bis circa 30° einschließen. Bevorzugt ist dieser Bereich zwischen 0° und 15° ausgebildet. Besonders bevorzugt für eine Ausrichtung der Reinigungsrichtung entlang einer Ablassrichtung ist ein Winkelbereich zwischen circa 0° und circa 5°. Die Ausrichtung des Reinigungsmittels mit einer Reinigungsrichtung entlang einer Ablassrichtung erlaubt es, das Reinigen in Richtung der Ablassöffnung zu verstärken bzw. zu verbessern. So werden sämtliche einzelnen Granulatkörner eines Einsatzmaterials durch das Reinigungsmittel in eine Richtung beschleunigt, welche im Wesentlichen der Ablassrichtung entspricht. Dies führt dazu, dass während des Reinigungsvorgangs die Verweilzeit der auszureinigenden Granulatkörner des Einsatzmaterials deutlich reduziert wird. Die Reduktion dieser Verweilzeit führt wiederum dazu, dass die Reinigungsleistung erhöht und gleichzeitig die notwendige Reinigungszeit für die identische Reinigungsleistung reduziert wird. Der gesamte Reinigungsvorgang kann damit mit höherer Reinigungsqualität in einem geringeren Zeitraum durchgeführt werden.

Ebenfalls ist es von Vorteil, wenn bei einer erfindungsgemäßen Extrusionsvorrichtung die Reinigungsvorrichtung wenigstens ein Reinigungsmittel aufweist mit einer Reinigungsrichtung im spitzen Winkel zu einer Innenwandung der Vorlagevorrichtung. Die Vorlagevorrichtung weist üblicherweise unterschiedliche Bauteile auf. Dies kann zum Beispiel ein Vorlagebehälter, ein Fallrohr und/oder ein Wägetrichter sein. Je nach tatsächlichem Bauteil können die Innenwandungen zur Schwerkraftrichtung in Einbausituation unterschiedlich ausgerichtet sein. Das Ausbilden eines Reinigungsmittels mit einer Reinigungsrichtung im spitzen Winkel zu einer Innenwandung führt dazu, dass in einem ebenfalls spitzen Winkel eine zugehörige Reinigungskraft auf der Innenwandung auftrifft. Dies gilt insbesondere bei der Ausbildung des Reinigungsmittels in Form einer Druckluftdüse, so dass ein zugehöriger Druckluftstrom in im Wesentlichen spitzen Winkel auf der Innenwandung auftrifft. Dies führt wiederum dazu, dass eine entsprechend hohe Reinigungswirkung an der Auftreffstelle, aber auch an den umgebenden Bereichen dieser Innenwandung zur Verfügung gestellt wird. Insbesondere wird durch den entsprechenden spitzen Winkel ein Zyklonstrom erzeugt, welcher es erlaubt, die Reinigungsleistung noch weiter zu verbessern und insbesondere eine gezielte und definierte Abfuhr der ausgereinigten Granulatkörner des Einsatzmaterials in Richtung einer Ablassrichtung zur Verfügung zu stellen. Ein solches Reinigungsmittel mit entsprechend spitzem Winkel kann auch als Reinigungsring ausgestaltet sein. Dieser spitze Winkel ist insbesondere im Bereich von circa 35° nach unten geöffnet ausgebildet.

Weiter ist es von Vorteil, wenn bei einer erfindungsgemäßen Extrusionsvorrichtung die Vorlagevorrichtung jeweils einen Wägetrichter, ein Fallrohr und/oder eine Dosierschnecke aufweist, wobei die Reinigungsvorrichtung zumindest ein Reinigungsmittel in dem Wägetrichter, in dem Fallrohr und/oder im Bereich der Dosierschnecke aufweist. Insbesondere sind an zwei oder auch sogar allen Orten die entsprechenden Reinigungsmittel der Reinigungsvorrichtung vorgesehen. Wie bereits angedeutet worden ist, können einzelne Bauteile mit unterschiedlichen Funktionalitäten die Vorlagefunktionalität der Vorlagevorrichtung zur Verfügung stellen. Somit können in all diesen Bauteilen der Vorlagevorrichtung auch Granulatkörner des Einsatzmaterials angeordnet sein, selbst nachdem das grundsätzliche Ablassen des Einsatzmaterials abgeschlossen ist. Um diese letzten Granulatkörner auszubringen und eine entsprechend unerwünschte Verunreinigung in dem nachfolgenden Produkt und damit in dem Folgematerial zu vermeiden, sind insbesondere in allen relevanten bzw. vorzugsweise in allen vorhandenen Bauteilen der Vorlagevorrichtung entsprechende Reinigungsmittel vorgesehen. Diese Reinigungsmittel können hinsichtlich ihrer Geometrie, Ausrichtung und tatsächlicher Funktionalität bzw. Ausgestaltung spezifisch für den jeweiligen Ort der Reinigung angepasst sein. Neben den beschriebenen Bauteilen sind auch einzelne mechanische Eingriffsbauteile, zum Beispiel in Form einer Verschlussschaufel unter dem Fallrohr mit einem eigenen Reinigungsmittel der Reinigungsvorrichtung ausstattbar.

Weiter ist es erfindungswesentlich, wenn bei einer erfindungsgemäßen Extrusionsvorrichtung die Reinigungsvorrichtung wenigstens ein Reinigungsmittel in Form einer Druckluftdüse aufweist. Eine Druckluftdüse ist eine besonders einfache und kostengünstige Ausgestaltung eines solchen Reinigungsmittels. Insbesondere kann die Druckluftdüse die entsprechend notwendige Druckluft für die Reinigung aus einem Druckluftnetz erhalten, welches üblicherweise in einem Unternehmen vorhanden ist. Das Schalten eines entsprechenden Druckluftventils führt dazu, dass die Reinigung beliebig ein- und ausgeschaltet werden kann. Neben rein qualitativ schaltendenden Ventilen sind auch flexible bzw. qualitativ schaltende Ventile denkbar, so dass eine unterschiedliche Reinigungsfunktionalität vorzugsweise mit unterschiedlichen Reinigungsqualitäten geschaltet werden kann. Das bedeutet im Rahmen der Druckluftdüse zum Beispiel, dass mit unterschiedlichen Druckluftstärken bzw. unterschiedlichen Anzahlen und Zeitdauern an Druckluftstößen unterschiedliche Reinigungsprogramme zur Verfügung gestellt werden können.

Ebenfalls ist erfindungswesentlich, wenn bei einer erfindungsgemäßen Extrusionsvorrichtung zumindest zwei Vorlagevorrichtungen wenigstens eine Ablassöffnung aufweisen mit einem Ablassverschluss zum Öffnen und Verschließen der Ablassöffnung und einer Behälterschnittstelle für die reversible Befestigung eines Ablassbehälters zum Aufnehmen von aus der jeweiligen Vorlagevorrichtung abgelassenem Einsatzmaterial, wobei ein Öffnungssensor vorgesehen ist für die Erkennung einer Stellung der Ablassöffnung. Dies bedeutet, dass die Ablassöffnung insbesondere den unteren Abschluss der Vorlagevorrichtung ausbildet, so dass durch die Ablassöffnung im Wesentlichen die Gesamtheit des Einsatzmaterials ausgebracht werden kann. Dabei erfolgt eine besonders einfache und kostengünstige Lösung für das Ablassen des Einsatzmaterials und für die nachfolgende Reinigung der Vorlagevorrichtung. Somit ist die Ablassöffnung auch ausschlaggebend für die Ausrichtung der Ablassrichtung und die entsprechend beschriebenen Korrelationsmöglichkeiten zur Reinigungsrichtung der einzelnen Reinigungsmittel. Bei dieser Ausführungsform ist es von Vorteil, wenn bei dem Öffnungssensor eine entsprechende Erkennung der Stellung der Ablassöffnung durchgeführt wird. So kann nun die Reinigung in Abhängigkeit dieser Information des Öffnungssensors gestartet, gestoppt oder relativiert werden. So sind beispielsweise Reinigungsschritte denkbar, welche nur bei geschlossener Ablassöffnung sinnvoll sind. Dies kann zum Beispiel zum Erzeugen von bewussten Wirbeleffekten innerhalb der Vorlagevorrichtung sein, wenn ein Aufwirbeln von abgelagertem Staub, Schmutz oder Granulatkörnern des Einsatzmaterials gewünscht ist. Für das tatsächliche Ausbringen während der Reinigung ist es notwendig, dass die Ablassöffnung geöffnet ist, so dass ein entsprechendes Sensorsignal abgewartet werden kann, wenn ein solcher Öffnungssensor diese Information zur Verfügung stellt. Somit kann vermieden werden, dass ein Ausbringen der Reinigung durchgeführt wird, wenn die Ablassöffnung in verschlossenem Zustand einem solchen Ausbringen noch entgegenstehen würde. Nicht zuletzt ist es auch denkbar, dass eine weitere Sensorik das Vorhandensein eines Behälters an der Behälterschnittstelle einer Ablassöffnung erkennt, so dass ein unerwünschtes Ausbringen in die freie Umgebung neben der Extrusionsvorrichtung wirkungsvoll vermieden wird. Dabei sind selbstverständlich einzelne Sensoren genauso denkbar, wie das Abgreifen eines Sollwertes für die Ventilstellung eines entsprechenden Verschlusses der Ablassöffnung. Dabei sind insbesondere diese Ausführungsformen auf die Nebenkomponenten einer Extrusionsvorrichtung bezogen, wobei eine Hauptkomponente mittig innerhalb der Nebenkomponenten angeordnet ist und ohne eine solche Ablassöffnung ausgestattet ist. Dies führt zu einer weiter verbesserten Reinigungssituation, da innerhalb der Hauptkomponente auf die Korrelation zur Ablassöffnung im Wesentlichen verzichtet werden kann.

Vorteilhaft ist es ebenfalls, wenn bei einer erfindungsgemäßen Extrusionsvorrichtung der Extruder einen Notsensor aufweist, für ein Erkennen einer Unterversorgung des Extruders mit Einsatzmaterial für ein Abrechen des Reinigungsprogramms mit der Reinigungsvorrichtung wenigstens einer Vorlagevorrichtung. Das bedeutet, dass erkannt wird, wenn die Pufferwirkung nicht mehr ausreicht, um den Extruder mit ausreichend Material zu bestücken. Einem heißen Extruder Material für das Extrudieren vorzuenthalten kann schwere Einschränkungen bis hin zu Defekten im Extruder nach sich ziehen. Daher ist in jedem Fall zu vermeiden, dass ein solches Leerlaufen stattfindet. Wenn nun ein Notsensor erkennt, dass ein solches Leerlaufen zu befürchten steht, kann das Reinigungsprogramm bei zumindest einer Vorlagevorrichtung abgebrochen werden, so dass diese in der Notsituation als Notvorlagevorrichtung nun wieder mit der Nachfüllung von Material beginnt, obwohl der Reinigungsvorgang noch nicht abgeschlossen war. Dies führt dazu, dass zwar diese Vorlagevorrichtung nochmals hinsichtlich Materialwechsel und Reinigungsvorgang von vorne bearbeitet werden muss, jedoch der Extruder hinsichtlich unerwünschter Defekte oder Beschädigungen geschützt worden ist. Ein solcher Notsensor kann zum Beispiel als Füllstandssensor in einer Mischkammer direkt vor dem Extruder ausgestattet bzw. ausgebildet sein.

Vorteilhaft ist es ebenfalls, wenn bei einer erfindungsgemäßen Extrusionsvorrichtung die Reinigungsvorrichtung einen Staubsensor aufweist für ein Erkennen einer Staubladung innerhalb der jeweiligen Vorlagevorrichtung für die Auswahl unterschiedlicher Reinigungsprogramme der Reinigungsvorrichtung. Das bedeutet, dass während des Normalbetriebes innerhalb der Extrusionsvorrichtung aus dem Granulat Stäube anfallen können, welche sich innerhalb der Vorlagevorrichtung absetzen. Um diese Stäube auszubringen, da auch solche Stäube eine Verunreinigung des Folgematerials darstellen können, ist ein solcher Staubsensor vorhanden, welcher zum Beispiel durch Messung von Transmission oder Gewicht, den Staub von Bauteilen sicher erkennen kann. Dabei kann nun je nach tatsächlich erkannter Staubbeladung eine unterschiedliche Auswahl unterschiedlicher Reinigungsprogramme erfolgen, so dass je nach Staubbeladung zum Beispiel mit unterschiedlichen Druckluftstärken an unterschiedlichen Druckluftdüsenpositionen gearbeitet werden kann.

Ebenfalls von Vorteil kann es sein, wenn bei einer erfindungsgemäßen Extrusionsvorrichtung die Vorlagevorrichtung einen Staubschutz aufweist gegen ein Austreten von Staub aus der Vorlagevorrichtung. Dieser Staubschutz kann insbesondere im Bereich eines Wägetrichters im Übergang zu einer Dosierschnecke der Vorlagevorrichtung angeordnet sein. Dabei kann ein solcher Staubschutz insbesondere reversibel angebracht sein, so dass er zum Beispiel als Filtertuch ausgestaltet ist. Das Vermeiden des Austretens von Staub führt dazu, dass insbesondere der Umgebungsbereich um die Extrusionsvorrichtung gegen Verschmutzung geschützt wird. Insbesondere während der Durchführung der Reinigung ist dieser Staubschutz von besonderem Vorteil, da in diesem Fall die Reinigungsfunktionalität einem Aufwirbeln von Staub innerhalb der Vorlagevorrichtung gleichkommt und auf diese Weise die Gefahr des Austretens von Staub deutlich vergrößert wäre.

Ebenfalls Gegenstand der vorliegenden Erfindung ist ein Verfahren für die Reinigung einer erfindungsgemäßen Extrusionsvorrichtung, aufweisend die folgenden Schritte:
- Erkennen eines Reinigungswunsches,
- Aktivieren einer Reinigungsvorrichtung in zumindest einer ausgewählten Vorlagevorrichtung der Extrusionsvorrichtung zur Durchführung eines Reinigungsprogramms,
- Erzeugen eines Abschlusssignals nach der Beendigung des Reinigungsprogramms.

Ein erfindungsgemäßes Verfahren bringt die gleichen Vorteile mit sich, wie sie ausführlich mit Bezug auf eine erfindungsgemäße Extrusionsvorrichtung erläutert worden sind. Der Reinigungswunsch kann dabei sowohl aktiv, als auch automatisch vorgegeben werden. So können beispielsweise im Laufe eines Materialwechsels nach dem Erkennen der finalen Ausbringung des Einsatzmaterials aus der Vorlagevorrichtung unter diversen Rahmenbedingungen die Reinigungsschritte automatisch gestartet werden. Auch eine manuelle Aktivierung, zum Beispiel durch ein manuelles Betätigen eines Auslösungsbefehls durch ein Maschinenbedienpersonal, ist im Sinne der vorliegenden Erfindung denkbar.

Vorteilhaft ist es ebenfalls, wenn bei einem erfindungsgemäßen Verfahren die Reinigungsvorrichtung wenigstens zwei Reinigungsmittel an unterschiedlichen Orten einer Vorlagevorrichtung aufweist, wobei in Richtung der Ablassrichtung der Vorlagevorrichtung die Reinigungsmittel nacheinander im Reinigungsprogramm aktiviert werden. Dabei kann selbstverständlich auch ein zeitliches Überlappen möglich sein. Auf diese Weise ist es möglich in Richtung der Ablassrichtung, insbesondere also in Schwerkraftrichtung von oben nach unten, die Reinigungsschritte durchzuführen. So wird die Reinigung am obersten Ende der Vorlagevorrichtung beginnen und sich langsam nach unten durcharbeiten. So können beispielsweise Druckluftdüsen im Vorlagebehälter zuerst mit Druckluft beaufschlagt werden, um von dort mit dem Abreinigen nach unten zu beginnen. Parallel oder nachfolgend erfolgt nun ein Abreinigen unterhalb des Vorlagebehälters zum Beispiel im Fallrohr und nachfolgend im Wägetrichter. Eine Kontamination während des Reinigens nach oben wird auf diese Weise im Wesentlichen vollständig und wirkungsvoll vermieden.

Ebenfalls von Vorteil ist es, wenn bei einem erfindungsgemäßen Verfahren die Reinigungsvorrichtung wenigstens ein Reinigungsmittel in Form einer Druckluftdüse aufweist, wobei im Rahmen des Reinigungsprogramms die Druckluftdüse zumindest zwei Druckluftstöße nacheinander abgibt. Auch drei oder mehr Druckluftstöße sind im Rahmen der vorliegenden Erfindung denkbar. Auch die Pause zwischen den Druckluftstößen ist eine Variationsmöglichkeit, um unterschiedliche Reinigungsprogramme voneinander unterscheiden zu können. Dabei ist entscheidend, mit welcher Druckluftstärke, mit welcher Anzahl an Druckluftstößen und mit welcher Pause zwischen den Druckluftstößen gearbeitet werden kann. Je nach Größe, Staubbeladung und Restanzahl an Granulatkörnern am Einsatzmaterial können dabei unterschiedlichste Kombinationen der voranstehend beschriebenen Parameter die optimale Reinigungsfunktionalität ausüben.

Ebenfalls von Vorteil ist es, wenn bei einem erfindungsgemäßen Verfahren die Vorlagevorrichtungen jeweils eine Dosierschnecke aufweisen, welche im Laufe des Reinigungsprogramms rückwärts betrieben wird. Es ist zwingend sicherzustellen, dass eine weitere Kontamination einer Mischkammer nachfolgend der Dosierschnecke mit Einsatzmaterial verhindert wird. Dafür wird die Dosierschnecke rückwärts betrieben und auf diese Weise darin noch befindliches Resteinsatzmaterial zurück in Richtung einer Ablassöffnung bewegt, so dass dort auch ein Ausbringen dieser Dosierschnecke erfolgt. Auch hier kann das Dosiermittel als Getriebe verstanden werden, welches die Rückwärtsbewegung der Dosierschnecke zur Verfügung stellt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform einer erfindungsgemäßen Extrusionsvorrichtung im Betriebszustand,
- Fig. 2: die Ausführungsform der Fig. 1 während des Absenkens der Füllstände,
- Fig. 3: die Ausführungsform der Fig. 1 und 2 nach dem Absenken auf einen Wechselfüllstand,
- Fig. 4: die Ausführungsform der Fig. 1 bis 3 während des Haltens des Wechselfüllstands,
- Fig. 5: die Ausführungsform der Fig. 1 bis 4 während eines Reinigungsprozesses und
- Fig. 6: eine alternative Ausführungsform einer Extrusionsvorrichtung.

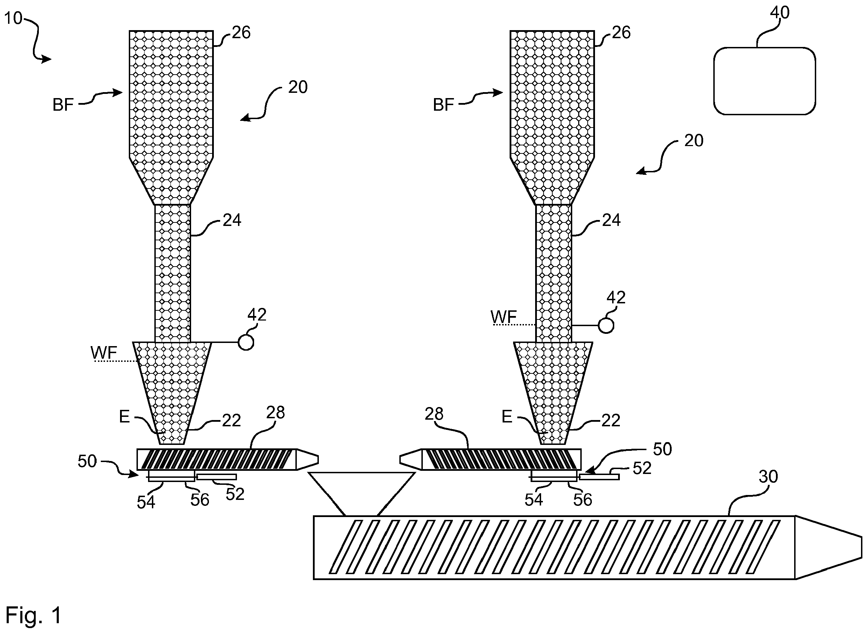

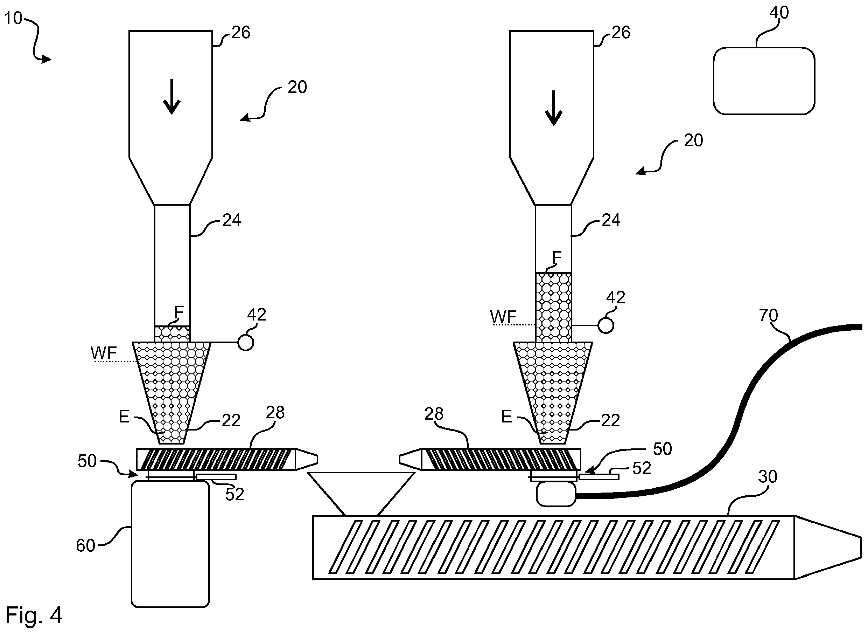

Die Fig. 1 bis 5 zeigen eine Extrusionsvorrichtung 10 mit zwei Vorlagevorrichtungen 20. Beide Vorlagevorrichtungen 20 sind hier mit einem Vorlagebehälter 26, einem Fallrohr 24 und einem Wägetrichter 22 ausgestattet. Mithilfe einer Kontrollvorrichtung 40 kann ein erfindungsgemäßes Verfahren durchgeführt werden und eine Reinigung kontrollierbar sein.

Fig. 1 zeigt den Betriebszustand mit einem Betriebsfüllstand BF in den Vorlagevorrichtungen 20. Das Einsatzmaterial E wird dabei über Dosierschnecken 28 dem Extruder 30 zugeführt und beim Absenken unter den Betriebsfüllstand BF des Füllstandes F in die jeweilige Vorlagevorrichtung 20 nachgefüllt.

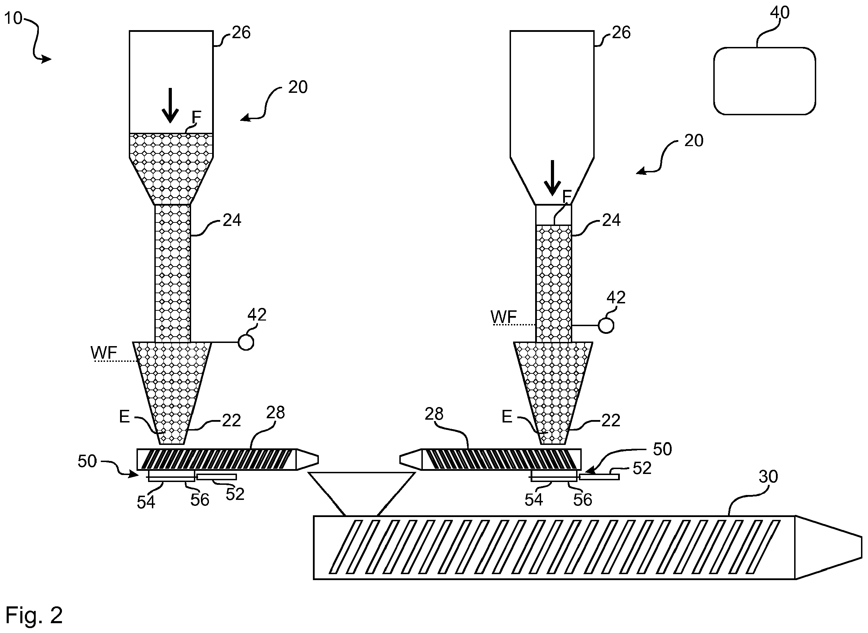

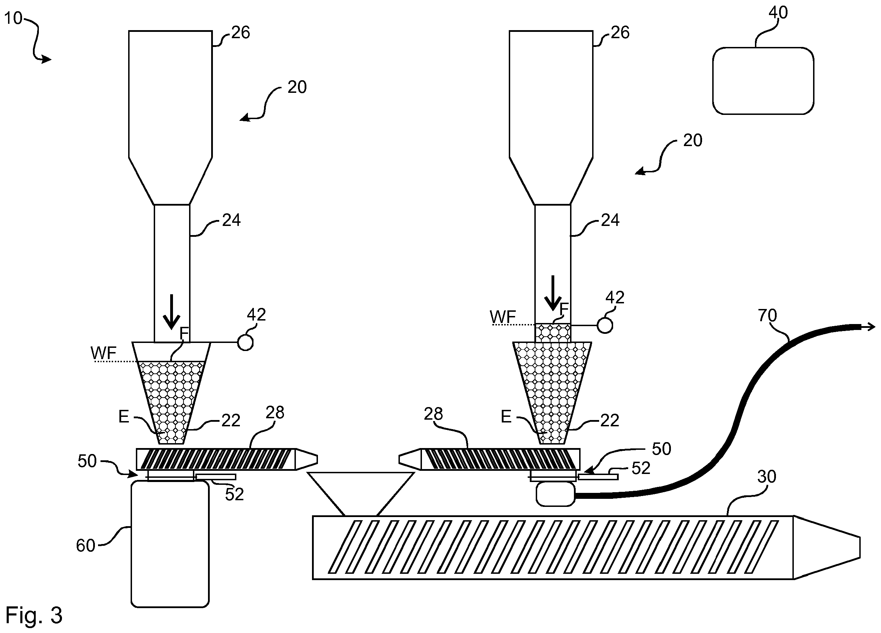

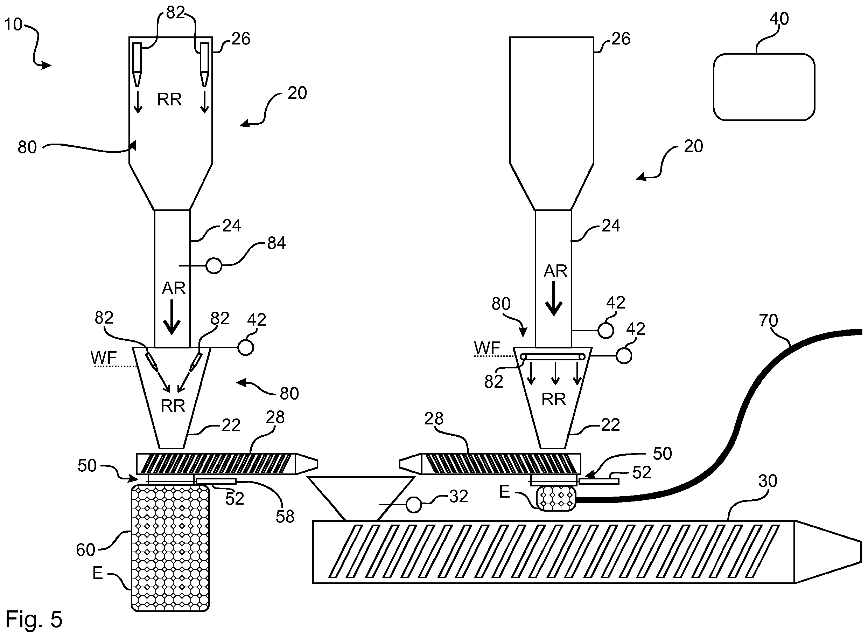

Ist nun ein Materialwechsel gewünscht, so kann als vorbereitende Maßnahme ein Absenken des Füllstandes F erfolgen, wie dies als Momentaufnahme in Fig. 2 dargestellt ist. Dies erfolgt in einfacher Weise durch ein Unterlassen der weiteren Nachfüllvorgänge, so dass durch die weitere Produktion des Extruders 30 die Füllstände F in Pfeilrichtung gemäß Fig. 2 nach unten absinken werden. Das Absinken wird durch die Kontrollvorrichtung 40 zugelassen, bis Wechselfüllstände WF gemäß Fig. 3 erreicht sind. Diese Wechselfüllstände WF bezeichnen eine reduzierte Puffersituation, bei welcher nun ein schnellerer und mit weniger Ausschussmaterial versehener Wechsel stattfinden kann. Zu diesem Zeitpunkt wird an einer entsprechenden Ablassöffnung 50 entweder ein Ablassbehälter 60 oder eine Rückführvorrichtung 70 angebracht, so dass über eine entsprechende Behälterschnittstelle 54 und ein Öffnen des Ablassverschlusses 52 nun ein Ablassen des Einsatzmaterials E erfolgen kann. Dies ist insbesondere mit einem Öffnungssensor gekoppelt, so dass ein Ablassen tatsächlich nur dann erfolgt, wenn auch ein geöffneter Ablassverschluss 52 erkannt wird. Sobald das Ablassen fertig durchgeführt worden ist, wurde eine Situation gemäß Fig. 5 erreicht. Beide Vorlagevorrichtungen 20 sind nun im Wesentlichen leer, jedoch noch mit Reststaub und Restgranulatkörnern des Einsatzmaterials E verunreinigt. In der Fig. 5 sind schematisch unterschiedliche Reinigungsmittel 82 einer Reinigungsvorrichtung 80 dargestellt. Jedes dieser Reinigungsmittel 82 weist Reinigungsrichtungen RR auf, die unterschiedliche Korrelationen aufweisen. So zeigt die Fig. 5 in der Vorlagevorrichtung 20 auf der linken Seite in dem Vorlagebehälter 26 Druckluftdüsen als Reinigungsmittel 82 mit einer Reinigungsrichtung RR entlang der Ablassrichtung AR nach unten und auf diese Weise eine Abreinigungsmöglichkeit von oben nach unten. Mithilfe eines Staubsensors 84 kann zudem die Staubbeladung innerhalb der Vorlagevorrichtung 20 erkannt werden. In dem Wägetrichter 22 sind angestellte Druckluftdüsen als Reinigungsmittel 82 vorgesehen, welche entsprechend ein winkliges Auftreffen im spitzen Winkel und damit das Erzeugen eines Zyklons als Reinigungsrichtung RR innerhalb des Wägetrichters 22 vorgeben. In der rechten Vorlagevorrichtung 20 ist ausschließlich im untersten Wägetrichter 22 eine ringförmige Druckluftdüse vorgesehen, welche als Reinigungsmittel 82 wirkt. Hier ist wieder in Ablassrichtung AR die Reinigungsrichtung RR ausgerichtet, diese ist jedoch damit winklig zu den angestellten konischen Wänden des Wägetrichters angeordnet. Auf diese Weise können ein Abreinigen nach unten und ein gleichzeitiges Auftreffen und verstärktes Reinigen der Wandungen des Wägetrichters 22 zur Verfügung gestellt werden.

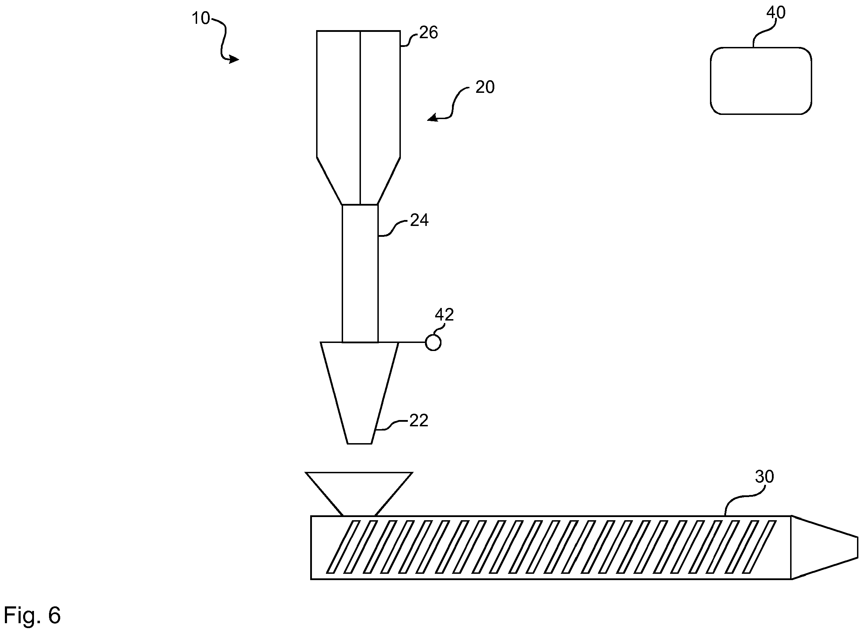

Die Fig. 6 zeigt eine alternative Ausführungsform einer Extrusionsvorrichtung 10. Diese basiert hinsichtlich der erfindungsgemäß beschriebenen Vorteile auf der Ausführungsform der Fig. 1, unterscheidet sich jedoch durch die Nachfüllfunktion. So ist hier ein sogenannter Batch-Prozess für das Nachfüllen vorgesehen. Der Vorlagebehälter 26 ist mit getrennten Volumina ausgestattet, so dass jedes Volumina des Vorlagebehälters 26 als eine Vorlagevorrichtung 20 verstanden werden kann. Darunter angeordnete Bauteile in Form des Fallrohrs 24 und des Wägetrichters 22 sind somit gemeinsame Bauteile der unterschiedlichen Vorlagevorrichtungen 20. Unterhalb des Wägetrichters 22 ist ein Mischtrichter, insbesondere mit einem Mischerantrieb, vorgesehen, welcher eine Homogenisierung vor dem Eintritt in den Extruder erlaubt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Extrusionsvorrichtung
- 20: Vorlagevorrichtung
- 22: Wägetrichter
- 23: Trichteröffnung
- 24: Fallrohr
- 26: Vorlagebehälter
- 28: Dosierschnecke
- 30: Extruder
- 32: Notsensor
- 40: Kontrollvorrichtung
- 42: Füllstandssensor
- 50: Ablassöffnung
- 52: Ablassverschluss
- 54: Behälterschnittstelle
- 56: Sensorvorrichtung
- 58: Öffnungssensor
- 60: Ablassbehälter
- 62: Ablassvolumen
- 70: Rückführvorrichtung
- 80: Reinigungsvorrichtung
- 82: Reinigungsmittel
- 84: Staubsensor

- E: Einsatzmaterial
- BF: Betriebsfüllstand
- WF: Wechselfüllstand
- F: Füllstand
- RR: Reinigungsrichtung
- AR: Ablassrichtung

## Patentansprüche

1. Extrusionsvorrichtung (10) für die Herstellung einer Kunststofffolie, aufweisend zumindest zwei Vorlagevorrichtungen (20) für die Vorlage von Einsatzmaterial (E) für einen Extruder (30), wobei in jeder Vorlagevorrichtung (20) eine automatische Reinigungsvorrichtung (80) angeordnet ist für ein Entfernen von Einsatzmaterial (E) aus der Vorlagevorrichtung (20) bei einem Materialwechsel für die Extrusionsvorrichtung (10), wobei die Reinigungsvorrichtung (80) wenigstens ein Reinigungsmittel (82) in Form einer Druckluftdüse aufweist und wobei zumindest zwei Vorlagevorrichtungen wenigstens eine Ablassöffnung (50) aufweisen mit einem Ablassverschluss (52) zum Öffnen und Verschließen der Ablassöffnung (50) und einer Behälterschnittstelle (54) für die reversible Befestigung eines Ablassbehälters (60) zum Aufnehmen von aus der jeweiligen Vorlagevorrichtung (20) abgelassenem Einsatzmaterial (E), wobei ein Öffnungssensor (58) vorgesehen ist für die Erkennung der Stellung der Ablassöffnung (50), **dadurch gekennzeichnet, dass** das Reinigungsmittel (82) eine Reinigungsrichtung mit einem maximalen Winkel von 0° bis circa 30° zu einer Ablassrichtung der Ablassöffnung (50) zum Ablassen des Einsatzmaterials (E) aufweist.

2. Extrusionsvorrichtung (10) nach Anspruch 1,
**dadurch gekennzeichnet,**
**dass** die Reinigungsvorrichtung (80) zumindest ein Reinigungsmittel (82) aufweist mit einer Reinigungsrichtung (RR) entlang einer Ablassrichtung (AR) der Vorlagevorrichtung (20).

3. Extrusionsvorrichtung (10) nach einem der vorangegangenen Ansprüche,
**dadurch gekennzeichnet,**
**dass** die Reinigungsvorrichtung (80) wenigstens ein Reinigungsmittel (82) aufweist mit einer Reinigungsrichtung (RR) im spitzen Winkel zu einer Innenwandung der Vorlagevorrichtung (20).

4. Extrusionsvorrichtung (10) nach einem der vorangegangenen Ansprüche,
**dadurch gekennzeichnet,**
**dass** die Vorlagevorrichtung (20) jeweils einen Wägetrichter (22), ein Fallrohr (24) und/oder eine Dosierschnecke (28) aufweisen, wobei die Reinigungsvorrichtung (80) zumindest ein Reinigungsmittel (82) in dem Wägetrichter (22), in dem Fallrohr (24) und/oder im Bereich der Dosierschnecke (28) aufweist.

5. Extrusionsvorrichtung (10) nach einem der vorangegangenen Ansprüche,
**dadurch gekennzeichnet,**
**dass** der Extruder (30) einen Notsensor (32) aufweist für ein Erkennen einer Unterversorgung des Extruders (30) mit Einsatzmaterial (E) für ein Abbrechen eines Reinigungsprogramms mit der Reinigungsvorrichtung (80) wenigstens einer Vorlagevorrichtung (20).

6. Extrusionsvorrichtung (10) nach einem der vorangegangenen Ansprüche,
**dadurch gekennzeichnet,**
**dass** die Reinigungsvorrichtung (80) einen Staubsensor (84) aufweist für ein Erkennen einer Staubbeladung innerhalb der jeweiligen Vorlagevorrichtung (20) für die Auswahl unterschiedlicher Reinigungsprogramme der Reinigungsvorrichtung (80).

7. Extrusionsvorrichtung (10) nach einem der vorangegangenen Ansprüche,
**dadurch gekennzeichnet,**
**dass** die Vorlagevorrichtung (20) einen Staubschutz aufweist gegen ein Austreten von Staub aus der Vorlagevorrichtung (20).

8. Verfahren für die Reinigung einer Extrusionsvorrichtung (10) mit den Merkmalen eines der Ansprüche 1 bis 7, aufweisend die folgenden Schritte:
- Erkennen eines Reinigungswunsches,
- Aktivieren einer Reinigungsvorrichtung (80) in zumindest einer ausgewählten Vorlagevorrichtung (20) der Extrusionsvorrichtung zur Durchführung eines Reinigungsprogramms,
- Erzeugen eines Abschlusssignals nach der Beendigung des Reinigungsprogramms.

9. Verfahren nach Anspruch 8,
**dadurch gekennzeichnet,**
**dass** die Reinigungsvorrichtung (80) wenigstens zwei Reinigungsmittel (82) an unterschiedlichen Orten einer Vorlagevorrichtung (20) aufweist, wobei in Richtung einer Ablassrichtung (AR) der Vorlagevorrichtung (20) die Reinigungsmittel (82) nacheinander im Reinigungsprogramm aktiviert werden.

10. Verfahren nach einem der Ansprüche 8 oder 9,
**dadurch gekennzeichnet,**
**dass** die Reinigungsvorrichtung (80) wenigstens ein Reinigungsmittel (82) in Form einer Druckluftdüse aufweist, wobei im Rahmen des Reinigungsprogramms die Druckluftdüse zumindest zwei Druckluftstöße nacheinander abgibt.

11. Verfahren nach einem der Ansprüche 8 bis 10,
**dadurch gekennzeichnet,**
**dass** die Vorlagevorrichtungen (20) jeweils eine Dosierschnecke (28) aufweisen, welche im Laufe des Reinigungsprogramms rückwärts betrieben wird.

## Claims

1. An extrusion device (10) for producing a plastic film, the extrusion device comprising at least two feed devices (20) for feeding a feedstock (E) for an extruder (30), wherein an automatic cleaning device (80) is arranged in each feed device (20) for removing the feedstock (E) from the feed device (20) when the material used for the extrusion device (10) is changed, wherein the cleaning device (80) has at least one cleaning means (82) in the form of a compressed air nozzle and wherein at least two feed devices have at least one discharge opening (50) with a discharge closure (52) for opening and closing the discharge opening (50) and a container interface (54) for the reversible fastening of a discharge container (60) for receiving feedstock (E) discharged from the respective feed device (20), wherein an opening sensor (58) is provided for detecting the position of the discharge opening (50), **characterized in that** the cleaning means (82) has a cleaning direction with a maximum angle of 0° to approx. 30° to a discharge direction of the discharge opening (50) for discharging the feedstock (E).

2. The extrusion device (10) according to claim 1,
**characterized in**
**that** the cleaning device (80) has at least one cleaning means (82) with a cleaning direction (RR) along a discharge direction (AR) of the feed device (20).

3. The extrusion device (10) according to any one of the preceding claims,
**characterized in**
**that** the cleaning device (80) has at least one cleaning means (82) with a cleaning direction (RR) at an acute angle to an inner wall of the feed device (20).

4. The extrusion device (10) according to any one of the preceding claims,
**characterized in**
**that** feed device (20) has in each case a weighing funnel (22), a downpipe (24) and/or a metering screw (28), wherein the cleaning device (80) has at least one cleaning means (82) in the weighing funnel (22) in the downpipe (24) and/or in the region of the metering screw (28).

5. The extrusion device (10) according to any one of the preceding claims,
**characterized in**
**that** the extruder (30) has an emergency sensor (32) for detecting an undersupply of the extruder (30) with feedstock (E) for canceling a cleaning program with the cleaning device (80) of at least one feed device (20).

6. The extrusion device (10) according to any one of the preceding claims,
**characterized in**
**that** the cleaning device (80) has a dust sensor (84) for detecting a dust load within the respective feed device (20) for the selection of different cleaning programs of the cleaning device (80).

7. The extrusion device (10) according to any one of the preceding claims,
**characterized in**
**that** the feed device (20) has dust protection against dust escaping from the feed device (20).

8. A method for cleaning an extrusion device (10) with the features of any one of claims 1 to 7, having the following steps:
- detecting a cleaning request,
- activating a cleaning device (80) in at least one selected feed device (20) of the extrusion device for carrying out a cleaning program,
- generating a completion signal after the end of the cleaning program.

9. The method according to claim 8,
**characterized in**
**that** the cleaning device (80) has at least two cleaning means (82) at different locations of a feed device (20), wherein the cleaning means (82) are activated successively in the cleaning program in the direction of a discharge direction (AR) of the feed device (20).

10. The method according to claim 8 or 9,
**characterized in**
**that** the cleaning device (80) has at least one cleaning means (82) in the form of a compressed air nozzle, wherein, within the scope of the cleaning program, the compressed air nozzle emits at least two compressed air blasts in succession.

11. The method according to claim 8 or 10,
**characterized in**
**that** the feed devices (20) each have a metering screw (28), which is operated in reverse during the course of the cleaning program.

## Revendications

1. Dispositif d'extrusion (10) pour la fabrication d'un film de matière plastique, comprenant au moins deux dispositifs d'alimentation (20) pour la présentation d'un matériau d'insertion (E) pour une extrudeuse (30), dans lequel, dans chaque dispositif d'alimentation (20), un dispositif de nettoyage automatique (80) est disposé pour une élimination du matériau d'insertion (E) hors du dispositif d'alimentation (20) lors d'un changement de matériau pour le dispositif d'extrusion (10), dans lequel le dispositif de nettoyage (80) comprend au moins un moyen de nettoyage (82) sous la forme d'une buse d'air comprimé et dans lequel au moins deux dispositifs d'alimentation comprennent au moins une ouverture d'évacuation (50) avec une fermeture d'évacuation (52) pour l'ouverture et la fermeture de l'ouverture d'évacuation (50) et une interface de récipient (54) pour la fixation réversible d'un récipient d'évacuation (60) pour le logement du matériau d'insertion (E) évacué hors du dispositif d'alimentation (20) respectif, dans lequel un capteur d'ouverture (58) est prévu pour la détection de la position de l'ouverture d'évacuation (50), **caractérisé en ce que** le moyen de nettoyage (82) présente une direction de nettoyage avec un angle maximal de 0° à environ 30° dans une direction d'évacuation de l'ouverture d'évacuation (50) pour l'évacuation du matériau d'insertion (E).

2. Dispositif d'extrusion (10) selon la revendication 1,
**caractérisé en ce que**
le dispositif de nettoyage (80) comprend au moins un moyen de nettoyage (82) avec une direction de nettoyage (RR) le long d'une direction d'évacuation (AR) du dispositif d'alimentation (20).

3. Dispositif d'extrusion (10) selon l'une des revendications précédentes,
**caractérisé en ce que**
le dispositif de nettoyage (80) comprend au moins un moyen de nettoyage (82) avec une direction de nettoyage (RR) à angle aigu par rapport à une paroi interne du dispositif d'alimentation (20).

4. Dispositif d'extrusion (10) selon l'une des revendications précédentes,
**caractérisé en ce que**
le dispositif d'alimentation (20) comprend une trémie de pesée (22), un tube de descente (24) et/ou une vis sans fin de dosage (28), dans lequel le dispositif de nettoyage (80) comprend au moins un moyen de nettoyage (82) dans la trémie de pesée (22), le tube de descente (24) et/ou au niveau de la vis sans fin de dosage (28).

5. Dispositif d'extrusion (10) selon l'une des revendications précédentes,
**caractérisé en ce que**
l'extrudeuse (30) comprend un capteur de secours (32) pour une détection d'une sous-alimentation de l'extrudeuse (30) en matériau d'insertion (E) pour une interruption d'un programme de nettoyage avec le dispositif de nettoyage (80) d'au moins un dispositif d'alimentation (20).

6. Dispositif d'extrusion (10) selon l'une des revendications précédentes,
**caractérisé en ce que**
le dispositif de nettoyage (80) comprend un capteur de poussière (84) pour une détection d'une charge de poussière à l'intérieur du dispositif d'alimentation (20) respectif pour la sélection de différents programmes de nettoyage du dispositif de nettoyage (80).

7. Dispositif d'extrusion (10) selon l'une des revendications précédentes,
**caractérisé en ce que**
le dispositif d'alimentation (20) comprend une protection anti-poussière contre une sortie de poussière du dispositif d'alimentation (20).

8. Procédé pour le nettoyage d'un dispositif d'extrusion (10) avec les caractéristiques d'une des revendications 1 à 7, comprenant les étapes suivantes :
- détection d'un souhait de nettoyage,
- activation d'un dispositif de nettoyage (80) dans au moins un dispositif d'alimentation (20) sélectionné du dispositif d'extrusion pour l'exécution d'un programme de nettoyage,
- production d'un signal de fin après la fin du programme de nettoyage.

9. Procédé selon la revendication 8,
**caractérisé en ce que**
le dispositif de nettoyage (80) comprend au moins deux moyens de nettoyage (82) à des endroits différents d'un dispositif d'alimentation (20), dans lequel, dans une direction d'évacuation (AR) du dispositif d'alimentation (20), les moyens de nettoyage (82) sont activés les uns après les autres dans le programme de nettoyage.

10. Procédé selon l'une des revendications 8 ou 9,
**caractérisé en ce que**
le dispositif de nettoyage (80) comprend au moins un moyen de nettoyage (82) sous la forme d'une buse d'air comprimé, dans lequel, dans le cadre du programme de nettoyage, la buse d'air comprimé génère au moins deux à-coups d'air comprimé successifs.

11. Procédé selon l'une des revendications 8 à 10,
**caractérisé en ce que**
les dispositifs d'alimentation (20) comprennent chacun une vis sans fin de dosage (28) qui est actionnée vers l'arrière au cours du programme de nettoyage.
